# EUROPEAN PATENT APPLICATION

(11) **EP 1 286 206 A2**
(43) Date of publication of application: **26.02.2003**
(21) Application number: 02255496.8
(22) Date of filing: 06.08.2002
(51) Int. Cl.: G02F 1/313, H04J 14/02, G02B 6/34

(54) **Tunable, reconfigurable optical add-drop multiplexer and a switching device**

(30) Priority: 17.08.2001 US 932221
(71) Applicant: Corning Incorporated, Corning, New York 14831 (US)
(72) Inventor: Chen, Gang (Paul), Monterey Park, CA 91754 (US); Krol, Mark Francis, Painted Post, NY 14870 (US); Liu, Yongqian, San Diego, CA 92130 (US); Wu, Qi, Eaton Town, NJ 07724 (US)
(74) Representative: Boon, Graham Anthony

(57) **Abstract**

A tunable, reconfigurable optical add/drop multiplexer (10) comprises a first signal routing component (14) and at least one wavelength selective switch (15) having an input port (15A) and an output port (15B). The input port is optically coupled to the first signal routing component. The wavelength signal selective switch is wavelength tunable, so as to allow a selected wavelength to be routed to the first signal routing component and the rest of the wavelengths to be routed to the output port. According to an embodiment of the present invention the first signal routing component (14) is an optical circulator.

## Description

### Field of Invention

The present invention relates generally to a reconfigurable optical add-drop multiplexer (ROADM) for WDM network applications that utilizes switches and a wavelength-tuning device.

### Background of the Invention

The increasing demand for high-speed voice and data communications has led to an increased reliance on optical communications, especially optical fiber communications. The use of optical signals as a vehicle to carry channeled information at high speed is preferred in many instances to carrying channeled information at other electromagnetic wavelengths/frequencies in media such as microwave transmission lines, coaxial cable lines, and twisted copper pair transmission lines. Advantages of optical media include higher channel capacities (bandwidth), greater immunity to electromagnetic interference, and lower propagation loss. In fact, it is common for high-speed optical systems to have signal rates in the range of approximately several megabits per second (Mbit/s) to approximately several tens of gigabits per second (Gbit/s), and greater. However, as the communication capacity is further increased to transmit greater amounts of information at greater rates over fiber, maintaining signal integrity can be exceedingly challenging.

The emergence of optical communications as a useful approach for short and long-haul data and voice communications has led to the development of a variety of optical amplifiers. One type of optical amplifier is the rare-earth element doped optical amplifier (i.e., an optical amplifier that has a host material doped with rare earth elements). One such rare-earth element optical amplifier is based on erbium-doped silica fiber. The erbium doped fiber amplifier (EDFA) has gained great acceptance in the telecommunications industry.

Another type of optical amplifier is a Raman amplifier. Raman amplifiers utilize optical transmission fiber as their gain medium. Both erbium-doped fiber amplifiers (EDFA) and Raman fiber amplifiers are useful in a variety of optical communication systems.

One way to more efficiently utilize available resources in the quest for high-speed information transmission is known as multiplexing. One particular type of multiplexing is wavelength division multiplexing (WDM). In WDM, several information streams (voice and/or data streams) share a particular transmission medium, such as an optical fiber. Each high-speed information channel is transmitted at a designated wavelength along the optical fiber. At the receiver end, the interleaved channels are separated (de-multiplexed) and may be further processed by electronics. (By convention, when the number of channels transmitted by such a multiplexing technique exceeds approximately four, the technique is referred to dense WDM or DWDM).

Dense Wavelength Division Multiplexing (DWDM) has been widely accepted as the technology of choice for the next generation optical communication systems to meet the increasing demand for information bandwidth. In order to reduce network cost, future DWDM networks will need to route signals of specific wavelengths through the optical communication system without performing optical to electric and electric to optical conversions. The increasing demand for bandwidth attracted considerable interest in utilization of optical add/ drop multiplexers (ADM) to implement add/drop functionality for DWDM networks.

Considerable efforts have been made to design fixed (i.e. non-reconfigurable and/or non-tunable) wavelength optical add/drop multiplexers (OADMs) using various techniques. These fixed OADMs generally include a combination of circulators and gratings, Mach-Zehnders and gratings, or phasar and thermo-optic switches. However, such devices have no way of re-configuring the optical network based on changing need, short of replacing the existing OADMs with another set of OADMs. This is both time-consuming and expensive.

One suggested approach to this problem is utilization of reconfigurable optical add/drop multiplexers (ROADMs). With ROADM, reconfigurable add/drop nodes can be implemented to form the basis of optical networks, in which customers can pay-on-demand. Such ROADM is described, for example, in the article entitled "A Hitless Reconfigurable Add/ Drop Multiplexer for WDM Network Utilizing Planar Waveguide, Thermo-Optic Switches and UV-reducing Gratings," by R.E. Scott et al, WHI, OFC'1998. However, although the disclosed add/ drop multiplexer is reconfigurable, it is not tunable. That is, the disclosed device can operate only on a predetermined set of wavelengths. This device allows someone to re-route a specific wavelength, but does not allow the device to be tuned so as to allow one to re-route a different wavelength with the same ROADM.

### Summary of the Invention

According to one aspect of the present invention a tunable, reconfigurable optical add/drop multiplexer comprises a first signal routing component and at least one wavelength selective switch device having an input port and an output port. The input port is optically coupled to the first signal routing component. The wavelength signal selective switch is wavelength tunable, so as to allow a selected wavelength to be routed to the first signal routing component and the rest of the wavelengths to be routed to the output port. According to an embodiment of the present invention the first signal routing component is an optical circulator.

According to one embodiment of the present invention, a wavelength tunable switching device comprises (a) an input port and an output port; (b) a first optical waveguide located between the input port and the output port; (c) a second optical waveguide located between the input port and the output port, the second optical waveguide having a wavelength tunable, wavelength selectable optical component; (d) a first switch selectively coupled to the first or the second optical waveguide for coupling signal light from the input port into one of the optical waveguides; and (e) a second switch selectively coupled to the first or the second optical waveguide for coupling the signal light from one of the first and second optical waveguides into the output port.

### Brief Description of Drawings

The invention is best understood from the following detailed description when read with the accompanying figures. It is emphasized that the various features are not necessarily drawn to scale. In fact, the dimensions may be arbitrarily increased or decreased for clarity of discussion.

**Figure 1** is a schematic diagram of a reconfigurable add/drop multiplexer RADM.

**Figure 2** is a schematic diagram of a tunable wavelength selective switch device incorporated in the RADM of Figure 1.

**Figures 3A and 3B** are schematic diagrams illustrating 2x2 switches of the selective, tunable switch device of Figure 2.

**Figure 4** is a schematic drawing of a tunable wavelength selective switch device of a second embodiment.

**Figure 5** is a schematic diagram illustrating a multi-channel ROADM incorporating a wavelength selective switch device of Figure 2.

### Detailed Description of the Embodiments

In the following detailed description, for purposes of explanation and not limitation, exemplary embodiments disclosing specific details are set forth in order to provide a thorough understanding of the present invention. However, it will be apparent to one having ordinary skill in the art that the present invention may be practiced in other embodiments that depart from the specific details disclosed herein. In other instances, detailed descriptions of well-known devices and methods may be omitted so as not to obscure the description of the present invention.

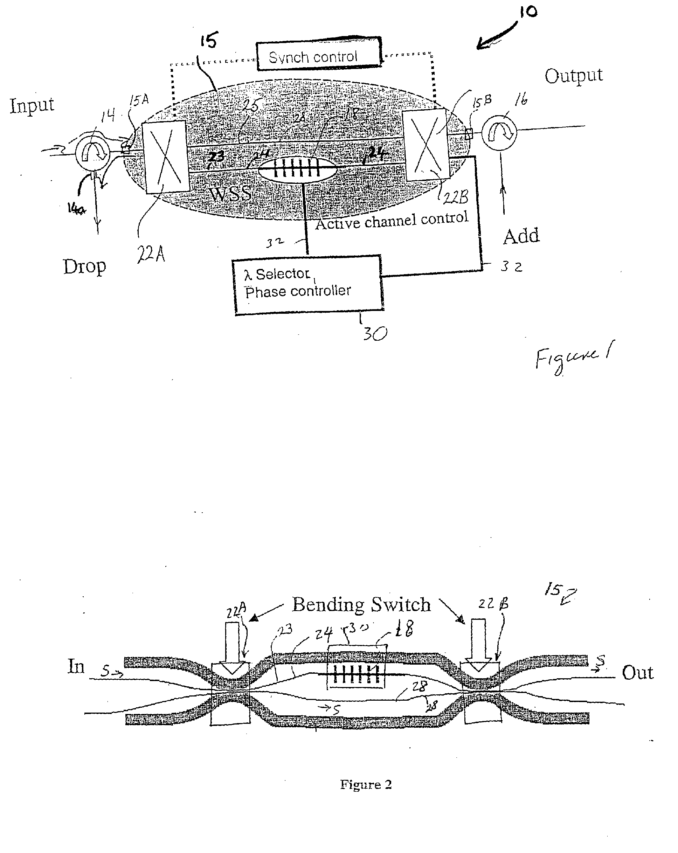

**Figure 1** illustrates an exemplary reconfigurable optical add/drop multiplexer (ROADM) **10** that is also tunable. The tunable ROADM **10** is formed by two signal routing components, (for example circulators **14, 16**) and a wavelength selective (tunable) switch WSS device **15** that includes either a fiber Bragg grating **18,** a dielectric filter, or another tunable wavelength filtering component. In this embodiment, the tunable ROADM **10** adds or drops a channel corresponding to the Bragg grating's wavelength of reflection. Because fiber Bragg grating **18** is tunable, the network provider can select which channel (i.e., a specific optical signal's wavelength) is being dropped or passed through by the ROADM **10**. This can be done by either remotely located network operator or via a routing algorithm. In the event of drop, another channel at the same wavelength may be added to the signal channels. Generally, the added signal would be provided to the WSS device **15** through its output port **15B,** for example, via the circulator **16.** As stated above, the add/drop channel corresponds to the specific reflection wavelength of the Bragg grating 18. The Bragg grating **18** is tuned by temperature, or strain, or other means so as to select a different drop channel (corresponding to the reflected wavelength λ_{d}). Thus, active temperature tuning or stress tuning can be used to achieve wavelength selection. More specifically, the local refractive index of the grating **18** is modified, thereby shifting the Bragg wavelength (reflection wavelength λ_{d}) by stretching, compressing or heating of the optical fiber containing the Bragg grating **18.**

The tunable ROADM **10** includes a pass-through path **25,** which enables non-interruptive reconfiguration and an alternative pass **23**. The term "non-interrupting" reconfiguration means that when a particular add/drop channel is switched between the two states (the two states being add/drop and pass-through states), the power of channels that are not being dropped or added is not impacted during switching. More specifically, the non-interruptive reconfiguration is accomplished by the tunable wavelength selective switch (WSS) device **15** of the ROADM **10** (see **Figure 1** and **Figure 2**) as described below. The tunable WSS device **15** includes two synchronized 1x2 or 2x2 switches **22A, 22B.** In this embodiment switches **22A**, **22B** are bending fiber coupler switches. The switches **22A**, **22B** vary the coupling ratio of the signal between the two paths 25 and 23. When both switches **22A**, **22B** are in bar state, the WSS device **15** is off and the signal is directed through the alternative channel selection path **23** corresponding to an optical fiber **24** with Bragg grating **18.** Thus, the device operates in normal OADM configuration. When both switches **22A, 22B** are in cross-bar state, the WSS device **15** is on and the signal is re-directed through a pass-through path **25** while the Bragg gratings **18** is being tuned to reflect the desired wavelength λ_{d}. The pass-through path **25** corresponds to the optical fiber **28.** The optical fiber **28** may be transmission fiber, for example SMF -28™ fiber, available from Corning Inc. of Corning, NY.

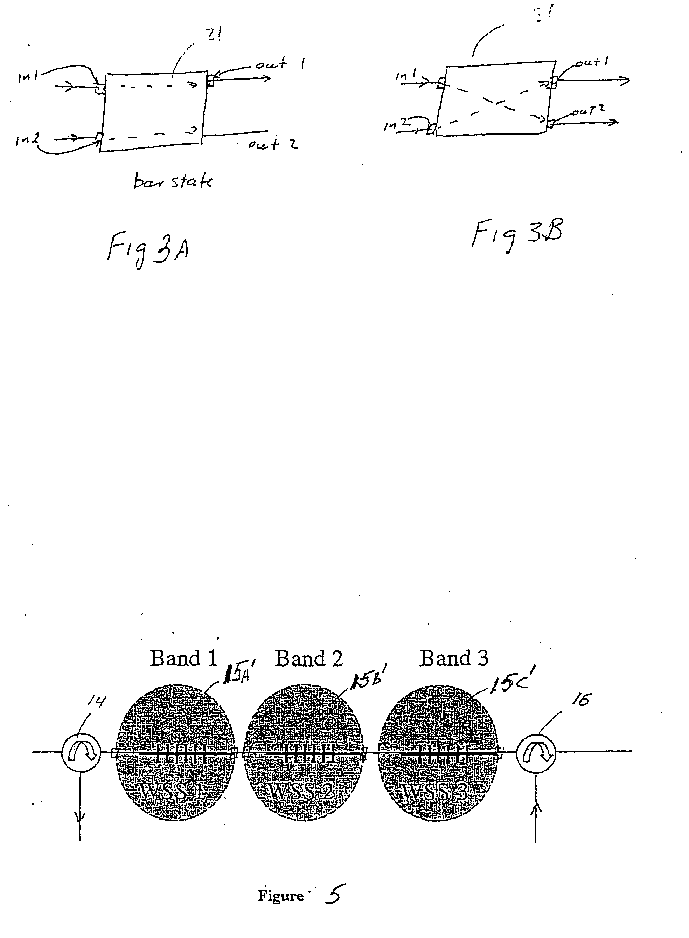

The bar state of the switch is the state of the switch when input 1 is routed to the output port #1 and input 2 is routed to output port #2. This is illustrated in **Figure 3A.** The cross-bar state of a switch is the state of the switch when input 1 is routed to the output port #2 and input 2 is routed to the output port #1. This is illustrated in **Figure 3B**. Thus, as described above, the two bending switches **22A, 22B** couple the optical signal S either through the channel selection path or through the reconfiguration path and in conjunction with the grating **18** and the fibers **24, 28** form the tunable non-interferometric WSS switch device **15**. During the switching state of the WSS device **15**, when the signal light is switched from fiber **24** to **28**, the optical phase relation between the two paths **23**, **25** is maintained in order to ensure that during switching the intensity of the output signal remains constant in each channel. Therefore, the optical transmittance of the optical signal will have no significant change during the transition state. That is, the optical transmittance of the WSS device **15** will stay below 10% and preferably at or below 5%. The optical transmittence is defined as Pₒᵤₜ/Pᵢₙ, where Pₒᵤₜ is the optical output power of the device and Pᵢₙ is the device's optical input power. It is preferable to operate at low switching speed (more than 10msec) to fully benefit from active path length stabilization so as to avoid the noise (i.e. intensity variation at the output port due to phase mismatch during switching) generated during switching state. Minimal optical path length change and active compensation during the switching states (e.g. heating) maintain the optical phase difference between the two paths **23, 25**. Because the WSS device **15** is non-interferometric switch in static state, there is minimal penalty from phase variance induced noise. A static state is the state of the device operation when the WSS device **15** is not being switched.

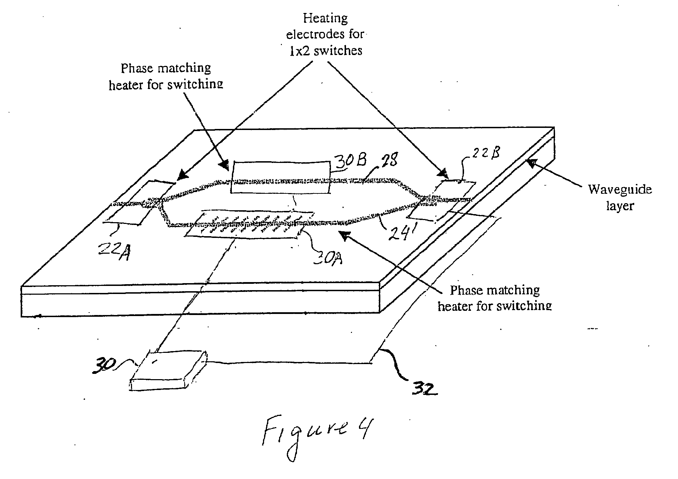

An alternative embodiment of a tunable WSS switch device **15** of the ROADM **10** is shown in **Figure 4**. This tunable WSS switch device **15** is similar to the one shown in **Figure 2**, but is in a planar configuration. More specifically, the planar WSS switch device **15** of **Figure 4** utilizes two 1 x 2 thermo-optic switches **22A, 22B** and two optical waveguides **24'** and **28'**, assembled in a Mach-Zehnder (MZ) configuration. One arm of the MZ contains a Bragg grating **18** that is tunable via a channel selector which includes a channel activator such as a heating electrode **30A,** for example. Similar electrode **30B** is located along the optical waveguide **24'** to keep the phase matching constant when the grating **18** is being tuned. Switching heaters **22A, 22B** activate the thermo-optic switches **22A, 22B** and the electrode **30B** keeps the WSS device **15** phase matched during switching.

To achieve accurate channel selection, channel selector **30, 30A** is utilized through an active wavelength control of the Bragg grating **18** with a feedback loop **32.** This is shown in **Figures 1, 2 and 4.** The channel selector in conjunction with a feed back loop **32** measures the reflectance wavelength of the Bragg grating **18.** The channel selector gives signal to an actuator to apply either less or more pressure, strain or heat to the Bragg grating **18.** The channel selector **30** may utilize, as an actuator, a heating coil or compression applying device. After the selection of add/drop channel the optical signal is switched back to the original add/ drop route (path **23**) without intensity interruption at the output port. Thus, the tunable ROADM can reconfigure an optical node to add/ drop a variety of channels corresponding to different wavelength, without interruption of any service.

Reconfiguration and tuning of the ROADM is accomplished in following three steps (1) Turn on WSS device **15.** (put it in pass-through state), routing signal light along the path **25,** through fiber **28.** This can be done remotely, by a network operator or by a routing algorithm. (2) While the signal light is routed through the fiber **28,** tune grating **26** to select the drop channel a specific wavelength that is being dropped. (3) Turn off WSS device **15** (put in add/ drop state), by routing the signal light through the channel selection path **23.** More specifically, the steps to tune and switch ROADM **10** are as follows:
1. Put WSS device **15** in pass-through state by putting 2x2 switches **(22A, 22B)** in cross-state. This will route the signal S entering the input port **15A** along fiber **28** and out of the output port **15B** (see **Figure 2**);
2. Tune grating **18** to a desired spectral channel. For example, a fiber Bragg Grating may be thermally tuned, or alternatively tuned by tensioning or compression via a wavelength tuning actuator **20**. A planar Bragg grating waveguide may also be thermally tuned in a similar manner.
3. Switch WSS device **15** to the add/drop state by putting 2x2 switches into bar state. This would route the signal S through the optical fiber **28** towards the grating **18.** The grating **18** is tuned to reflect a specific wavelength of light λ_{d} back towards the circulator **14,** and the signal corresponding to this wavelength λ_{d} is then dropped through the drop port **14A** of the circulator **14**. The rest of the signal wavelengths pass through the grating and the fiber **18** and enter the circulator **16.**

The tunable ROADM architecture described here forms the basis of a simple all-fiber tunable add/drop module. Depending on the network requirements for tuning range and tuning speed, one can utilize a split-band configuration to achieve a wider channel selection range.

The split-band configuration utilizes a plurality of tunable concatenated ROADMs (**Figure 5**). Each WSS device **15A', 15B', 15C'** can select a single channel within a certain band of wavelengths by tuning an individual grating. Thus, the applicants achieve a simple architecture for TOADM based non-interferometric switches and an active wavelength selector. The technique offers flexibility in implementing all-fiber, tunable add/drop function to a wide spectrum of OADM devices. The added functionality includes non-interruptive channel selection and wavelength stabilization. The architecture provides a tunable optical add/drop multiplexer and provides an important advantage of flexibility for future optical network applications.

It will be apparent to those skills in the art that various modifications and variations can be made to the present invention without departing from the spirit or scope of the invention. Thus, it is intended that the present invention cover modifications and variations of this invention provided they come within scope of the appended claims and their equivalents.

## Claims

1. A tunable, reconfigurable optical add/drop multiplexer comprising:
(a) a first signal routing component; and
(b) at least one wavelength selective switch device having an input port and an output port, said input port being optically coupled to said first signal routing component, said wavelength signal selective switch being wavelength tunable, so as to allow a selected wavelength to be routed to said first signal routing component and the rest of the wavelengths to be routed to said output port.

2. The tunable, reconfigurable optical add/ drop multiplexer of claim 1 wherein said selected wavelength is reflected towards said first signal routing component.

3. The tunable, reconfigurable optical add/ drop multiplexer of claim 1 wherein first signal routing component is a circulator.

4. A reconfigurable optical add/drop multiplexer according to claim 1, further comprising a second signal routing component coupled to said output port.

5. The tunable, reconfigurable optical add/drop multiplexer according to claim 1, wherein second signal routing component is adapted to route an additional selected wavelength signal to said selective switch device through said output port.

6. The tunable, reconfigurable optical add/drop multiplexer according to claim 1, wherein at least one of said first signal routing component is an optical circulator.

7. The tunable, reconfigurable optical add/ drop multiplexer according to claim 1 wherein said wavelength selective switch device includes a wavelength tunable grating.

8. A wavelength tunable switching device comprising:
(a) an input port and an output port;
(b) a first optical waveguide;
(c) a second optical waveguide, said second optical waveguide having a wavelength tunable, wavelength selectable optical component;
(d) a first switch selectively coupled to said first or said second optical waveguide for coupling signal light from said input port into one or another of said waveguides; and
(e) a second switch selectively coupled to said first or said second optical waveguide for coupling said signal light from one of said first and second optical waveguides into said output port.

9. The switching device according to claim 8, wherein said first and second optical waveguides are optical fibers.

10. The switching device according to claim 8, wherein said wavelength tunable, wavelength selectable optical component is a Bragg grating.

11. The switching device according to claim 8, wherein said first switch is a 2x2 switch.

12. The switching device according to claim 8, wherein said second switch is a 2x2 switch.

13. The switching device according to claim 8, further comprising:
(a) a wavelength selector; and
(b) a wavelength switch actuator.

14. The switching device according to claim 13, wherein said actuator is a heater.

15. The switching device according to claim 13, wherein said actuator is a tension actuator.

16. The switching device according to claim 13, wherein said actuator is a compression actuator.
